# EUROPEAN PATENT APPLICATION

(11) **EP 1 517 457 A1**
(43) Date of publication of application: **23.03.2005**
(21) Application number: 03807957.0
(22) Date of filing: 14.08.2003
(51) Int. Cl.: H04B 7/26

(54) **BASE STATION APPARATUS AND COMMUNICATION TERMINAL APPARATUS**

(30) Priority: 08.10.2002 JP 2002295458; 27.12.2002 JP 2002379566
(71) Applicant: MATSUSHITA ELECTRIC INDUSTRIAL CO., LTD., Kadoma-shi, Osaka 571-8501 (JP)
(72) Inventor: UEHARA, Toshiyuki, Yokohama-shi, Kanagawa 232-0011 (JP); AOYAMA, Takahisa, Yokohama-shi, Kanagawa 233-0007 (JP); YOSHII, Isamu, Urayasu-Shi, Chiba 279-0014 (JP); HIRAMATSU, Katsuhiko, Yokosuka-shi, Kanagawa 238-0031 (JP)
(74) Representative: Grünecker, Kinkeldey, Stockmair & Schwanhäusser Anwaltssozietät
(86) International application number: PCT/JP2003/010335
(87) International publication number: WO 2004/034609

(57) **Abstract**

A reception power measurement section 107 measures reception powerfromreceived data. A transmission power information extracting section 106 extracts information of transmission power of a dedicated channel of mobile equipment included in received data. A condition setting section 108 calculates a transmission parameter of packet data and transmission power in scheduled mobile equipment using information of reception quality, reception power and transmission power of the dedicated channel, and outputs information of the calculated parameter and transmission power command information to channel coding sections 111-1 to 111-n.

The channel coding sections 111-1 to 111-n code transmission data including transmission power command information and transmission parameter information to be notified to the scheduledmobile equipment. This makes it possible to perform communications based on suitable resource management in an uplink.

## Description

### Technical Field

The present invention relates to a base station apparatus and communication terminal apparatus and particularly relates to a base station apparatus and communication terminal apparatus that performs communications by transmission power according to communication environments in a system that performs high-speed packet transmission in an uplink.

### Background Art

Conventionally, in the field of the radio communication system, there is proposed HSDPA (High Speed Downlink Packet Access) in which multiple communication terminal apparatuses share a high speed and large capacity down channel to perform high-speed packet transmission in a downlink.

In this HSDPA system, the base station apparatus receives a signal called CQI (Channel Quality Indicator), which indicates a modulation scheme of and a coding rate that can be demodulated in a communication terminal apparatus from the communication terminal apparatus. Then, the base station apparatus, which transmits data, sets optimal transmission power according to communication environments of the respective users, thereby making it possible to perform suitable resource management.

However, in the conventional base station apparatus and communication terminal apparatus, the base station apparatus sets transmission power using a system dedicated to a downlink such as the HSDPA system to transmit high-speed and large capacity data. On the other hand, in the case where high-speed and large capacity data is transmitted by optimal transmission power in an uplink, the mobile equipment sets transmission power to transmit data. Accordingly, since it is the communication terminal apparatus that sets transmission power to transmit packet data, even if the system dedicated to the downlink such as the HSDPA is directly applied to the uplink, the base station apparatus cannot suitably manage transmission power of each communication terminal apparatus to cause a problem in which appropriate resource management cannot be performed.

### Summary of Invention

An object of the present invention is to provide a base station apparatus and communication terminal apparatus capable of performing communications in an uplink based on suitable resource management.

The above object can be achieved when the base station performs scheduling using reception power, reception quality, and communication quality relating information such as transmission power information transmitted from the mobile equipment and transmits transmission power information calculated using the reception power, reception quality, and communication quality relating information to only a scheduled mobile equipment, and each scheduled mobile equipment extracts transmission power information from received data to set transmission power based on transmission power information.

### Brief Description of Drawings

FIG. 1 is a block diagram illustrating a configuration of a base station apparatus according to Embodiment 1 of the present invention;
FIG. 2 is a block diagram illustrating a configuration of a communication terminal apparatus according to Embodiment 1 of the present invention;
FIG. 3 is a block diagram illustrating a configuration of a condition setting section;
FIG. 4 is a view explaining operations of a base station apparatus and those of mobile equipment;
FIG. 5 is a block diagram illustrating a configuration of a base station apparatus according to Embodiment 2 of the present invention;
FIG. 6 is a block diagram illustrating a configuration of a communication terminal apparatus according to Embodiment 2 of the present invention;
FIG. 7 is a block diagram illustrating a configuration of a condition setting section;
FIG. 8 is a block diagram illustrating a configuration of a base station apparatus according to Embodiment 3 of the present invention;
FIG. 9 is a block diagram illustrating a configuration of a communication terminal apparatus according to Embodiment 3 of the present invention;
FIG. 10 is a block diagram illustrating a configuration of a condition setting section;
FIG. 11 is a block diagram illustrating a configuration of mobile equipment according to Embodiment 4 of the present invention;
FIG. 12 is a flowchart illustrating operations of mobile equipment according to Embodiment 4 of the present invention;
FIG. 13 is a block diagram illustrating a configuration of mobile equipment according to Embodiment 5 of the present invention;
FIG. 14 is a flowchart illustrating operations of mobile equipment according to Embodiment 5 of the present invention;
FIG. 15 is a block diagram illustrating a configuration of mobile equipment according to Embodiment 6 of the present invention;
FIG. 16 is a flowchart illustrating operations of mobile equipment according to Embodiment 6 of the present invention;
FIG. 17 is a block diagram illustrating a configuration of a base station apparatus according to Embodiment 7 of the present invention;
FIG. 18 is a block diagram illustrating a configuration of a condition setting section according to Embodiment 7 of the present invention;
FIG. 19(a) is a view explaining setting of transmission power; and
FIG. 19(b) is a view explaining settings of transmission power.

### Best Mode for Carrying Out the Invention

The following will specifically explain Embodiments of the present invention with reference to the drawings.

### (Embodiment 1)

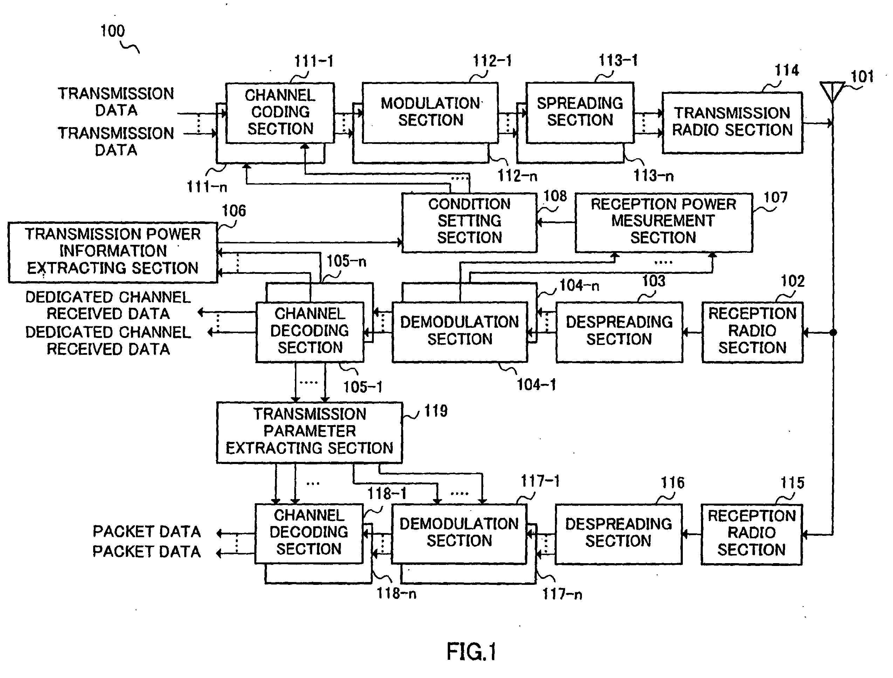

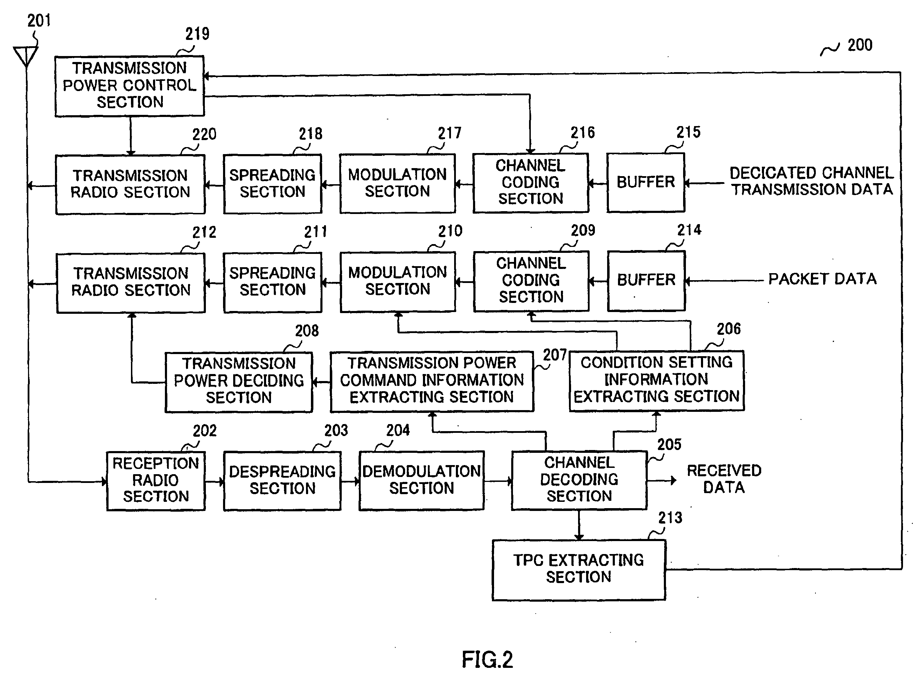

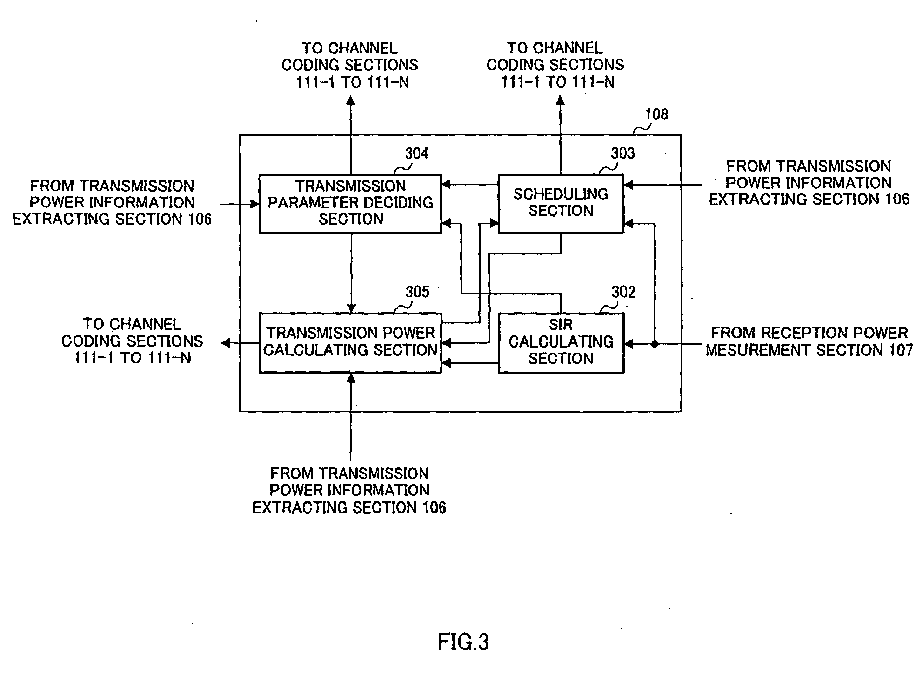

FIG. 1 is a block diagram illustrating a configuration of a base station apparatus 100 according to this embodiment; FIG. 2 is a block diagram illustrating a configuration of mobile equipment 200 as a communication terminal apparatus; and FIG. 3 is a block diagram illustrating a configuration of a condition setting section 108.

A reception radio section 102, a despreading section 103, demodulation sections 104-1 to 104-n, and channel coding sections 105-1 to 105-n are a reception system for receiving received data of a dedicated channel.

Moreover, a reception radio section 115, a despreading section 116, demodulation sections 117-1 to 117-n and channel coding sections 118-1 to 118-n are a reception system for receiving packet data.

Furthermore, a buffer 214, a channel coding section 209, a modulation section 210, a spreading section 211, and a transmission radio section 212 are a transmission system for transmitting packet data.

Moreover, a buffer 215, a channel coding section 216, a modulation section 217, a spreading section 218, and a transmission power control section 219 and a transmission radio section 220 are a transmission system for transmitting transmission data of a dedicated channel.

First of all, the configuration of the base station apparatus 100 will be explained using FIG. 1. The reception radio section 102 performs processing such as down-conversion from a radio frequency to a baseband frequency to a received signal received by an antenna 101, and outputs the result to the despreading section 103.

The despreading section 103 despreads the received signal input from the reception radio section 102 using the same spreading code as the spreading code used to spread, and outputs the result to the demodulation sections 104-1 to 104-n.

The demodulation sections 104-1 to 104-n demodulate the received signal input from the despreading section 103 and output the result to the channel coding sections 105-1 to 105-n and a reception power measurement section 107.

The channel coding sections 105-1 to 105n demodulate received signals input from the demodulation sections 104-1 to 104-n to obtain received data for each mobile equipment and output the demodulated received data to a transmission power information extracting section 106 and a transmission parameter extracting section 119.

The transmission power information extracting section 106 extracts transmission power information of each mobile equipment from the received signals input from the channel coding sections 105-1 to 105-n and outputs the extracted transmission power information to the condition setting section 108.

The reception power measurement section 107 calculates reception power from the demodulated received signals input from the demodulation sections 104-1 to 104-n and outputs the calculated reception power to the condition setting section 108.

The condition setting section 108, serving as an information generating section, decides scheduling, which determines a mobile station transmittable from each mobile equipment 200, and a transmission parameter, which is used when the scheduled mobile equipment 200 generates transmission data, and calculates transmission power of each mobile equipment 200 based on reception power input from the reception power measurement section 107 and transmission power information input from the transmission power information extracting section 106. Then, the condition setting section 108 outputs the scheduling result to the channel coding sections 111-1 to 111-n of the corresponding mobile station. Moreover, the condition setting section 108 outputs the calculated transmission parameter information to the channel coding sections 111-1 to 111-n and outputs the calculation result of transmission power, serving as transmission power command information, to the channel coding sections 111-1 to 111-n. Though the transmission parameter information is information of a modulation scheme and a coding rate, information may be other parameter information without limiting to the information of the modulation scheme and the coding rate. Furthermore, though scheduling information is individually transmitted to the mobile station here, the information may be transmitted by a common control channel. Though transmission power information is individually transmitted to the mobile station here, the information may be transmitted in any way as long as the mobile station and the transmission power information are associated with each other. In addition, the details of the condition setting section 108 will be described later.

The channel coding sections 111-1 to 111-n, serving as notifying sections, code transmission data including transmission parameter information and transmission power command information input from the condition setting section 108 and output the result to modulation sections 112-1 to 112-n.

The modulation sections 112-1 to 112-n modulate transmission data input from the channel coding sections 111-1 to 111-n and output the result to spreading sections 113-1 to 113-n.

The spreading sections 113-1 to 113-n spread transmission data input from the modulation sections 112-1 to 112-n using a spreading code and output the result to a transmission radio section 114.

The transmission radio section 114 performs processing such as up-conversion from a baseband frequency to a radio frequency to the transmission signals input from the spreading sections 113-1 to 113-n and transmits the result from an antenna 101. The transmission power command information included in transmission data is information of individual transmission power that is used when one or multiple mobile equipment to which transmission permission is given transmits packet data and the mobile station can set transmission power at the time of transmitting packet data using a channel for packet data transmission based on the transmission power command information.

The reception radio section 115 performs processing such as down-conversion from a radio frequency to a baseband frequency to reception packet data received by the antenna 101 and outputs the result to the despreading section 116.

The despreading section 116 despreads packet data input from the reception radio section 115 using the same spreading code as the spreading code used to spread and outputs the result to the demodulation sections 117-1 to 117-n.

The demodulation sections 117-1 to 117-n demodulate packet data input from the despreading section 116 and outputs the result to the channel coding sections 118-1 to 118-n based on information of a modulation system input from the transmission parameter extracting section 119.

The channel coding sections 118-1 to 118-n decode packet data input from the demodulation sections 117-1 to 117-n to make it possible to obtain packet data for each mobile equipment based on information of the coding rate input from the transmission parameter extracting section 119.

The transmission parameter extracting section 119 extracts information of the modulation scheme, coding rate from the received data of dedicated channels input from the channel coding sections 105-1 to 105-n and outputs the extracted modulation scheme information to the demodulation sections 117-1 to 117-n, and outputs the extracted coding rate information to the channel coding sections 118-1 to 118-n.

An explanation will be next given of a configuration of the mobile equipment 200, serving as a communicating terminal for the base station apparatus 100, using FIG. 2. A reception radio section 202 performs processing such as down-conversion from a radio frequency to a baseband frequency to received data received by an antenna 201 and outputs the result to a despreading section 203.

The despreading section 203 despreads received data input from the reception radio section 202 using the same spreading code as the spreading code used upon spreading processing and outputs the result to a demodulation section 204.

The demodulation section 204 demodulates received data input from the despreading section 203 to output to a channel coding sections 205.

The channel coding section 205 performs processing such as coding to the received data input from the demodulation section 204 and outputs the result to a transmission power command information extracting section 207 and a condition setting information extracting section 206.

The condition setting information extracting section 206 extracts transmission parameter information from received data input from the channel coding section 205 and outputs the extracted transmission parameter information to a channel coding section 209 and a modulation section 210.

The transmission power command information extracting section 207, serving as an extracting section, extracts transmission power information from received data input from the channel coding section 205 and outputs the result to a transmission power deciding section 208.

The transmission power deciding section 208, serving as a transmission power setting section, decides transmission power of a channel that transmits packet data based on transmission power information input from the transmission power command information extracting section 207 and outputs the decided transmission power to a transmission radio section 212.

The channel coding section 209 encodes the packet data and outputs the result to the modulation section 210 based on information of the coding rate of transmission parameter information input from the condition setting information extracting section 206.

The modulation section 210 modulates packet data input from the channel coding section 209 and outputs the result to a spreading section 211 based on information of a modulation scheme of the transmission parameter information input from the condition setting information extracting section 206.

The spreading section 211 spreads packet data input from the modulation section 210 using a predetermined spreading code and outputs the result to a transmission radio section 212.

The transmission radio section 212, serving as a transmitting section, performs processing such as up-conversion from a baseband frequency to a radio frequency to packet data input from the spreading section 211 and transmits the result from the antenna 201.

A TPC extracting section 213 extracts TPC information from received data input from the channel coding section 205 and outputs the result to a transmission power control section 219. The TPC information is information that is notified from the base station apparatus in order to execute transmission power control by the mobile equipment 200.

A buffer 214 temporarily stores packet data and outputs the result to the channel coding section 209 with predetermined transmission timing.

A buffer 215 temporarily stores transmission data of a dedicated channel, and outputs the result to the channel coding section 216 with predetermined transmission timing.

The channel coding section 216 codes transmission data input from the buffer 215 and transmission power information input from the transmission power control section 219 and outputs the result to the modulation section 217.

The modulation section 217 modulates transmission data input from the channel coding section 216 and outputs the result to the spreading section 218.

The spreading section 218 spreads transmission data input from the modulation section 217 and outputs the result to a transmission radio section 220.

The transmission power control section 219 controls an amplifier included in the transmission radio section 220 in order to control transmission power at the time of transmitting transmission data of a dedicated channel based on a transmission power control command input from the TPC extracting section 213. Moreover, the transmission power control section 219 outputs information of transmission power set by transmission power control as transmission power information to the channel coding section 216. The transmission radio section 220 performs processing such as up-conversion from a baseband frequency to a radio frequency to transmission data input from the spreading section 218 and transmits transmission data of the dedicated channel from the antenna 201 using transmission power controlled by the transmission power control section 219.

An explanation will be next given of details of the condition setting section 108 using FIG. 3.

An SIR calculating section 302 calculates an amount of interference from reception power of all mobile equipment input from the reception power measurement section 107. The amount of interference is reception power in the mobile equipment 200 except the mobile equipment 200 as an object where transmission power command information is generated.

The SIR calculating section 302 calculates an SIR (Signal to Interference Ratio), which is reception quality, using the calculated amount of interference and reception power of the mobile equipment 200 as an object where transmission power command information is generated input from the reception power measurement section 107, and outputs the calculated SIR to a transmission power calculating section 305 and a transmission parameter deciding section 304.

A scheduling section 303 executes scheduling according to resource circumstances using transmission power information input from the transmission power information extracting section 106 and reception power input from the reception power measurement section 107, and outputs the scheduling result to the transmission parameter deciding section 304, the channel coding sections 111-1 to 111-n and the transmission power calculating section 305.

Namely, the scheduling section 303 judges that a propagation environment is good in the mobile equipment in which a reduction in level of reception power is smaller than that in level of transmission power of the dedicated channel using the transmission power of the dedicated channel of each mobile equipment input by the transmission power information extracting section 106 and the reception power input by the reception power measurement section 107, and executes scheduling in such a way that the mobile equipment in a good propagation environment preferentially transmits packet data using a channel for packet data transmission. Moreover, the scheduling section 303 allocates mobile equipment that should be permitted to transmit packet data as judging how many mobile equipment 200 can be allocated within a range that does not exceed an upper limit value of reception power in the base station apparatus 100 based on transmission power information, which is input from the transmission power calculating section 305 and is instructed to each mobile equipment.

As a result of scheduling input from the scheduling section 303, the transmission parameter deciding section 304 decides a transmission parameter to the scheduled mobile equipment 200 based on the transmission power information input from the transmission power information extracting section 106 and SIR input from the SIR calculating section 302.

Namely, the transmission parameter deciding section 304 obtains an upper limit value of transmission power of packet data using transmission power of the dedicated channel input from the transmission power information extracting section 106 and the upper limit value of transmission power in each mobile equipment 200. Then, the transmission parameter deciding section 304 obtains SIR of packet data when the amount of interference does not change using transmission power of packet data in a range that does not exceed the upper limit value of transmission power of packet data. The transmission parameter deciding section 304 decides a transmission parameter by SIR of packet data obtained by use of a reference table between SIR of packet data and the transmission parameter, and outputs information of the decided transmission parameter to the transmission power calculating section 305.

The transmission power calculating section 305 calculates transmission power of packet data that is transmitted by use of a channel for transmitting packet data in the scheduled mobile equipment 200 based on transmission parameter information, scheduling information and SIR input from the SIR calculating section 302, and outputs the calculated transmission power serving as transmission power command information to the channel coding sections 111-1 to 111-n and the scheduling section 303.

Namely, the transmission power calculating section 305 obtains a required SIR of packet data from information of the transmission parameter input from the transmission parameter deciding section 304 using the reference table between the transmission parameter and SIR of packet data.

The transmission power calculating section 305 compares SIR of the dedicated channel input from the SIR calculating section 302 with the obtained required SIR of packet data, calculates an offset value as to how much dB is lacking in transmission power of packet data as compared with transmission power of the dedicated channel, and adds the calculated offset value to transmission power of the dedicated channel input from the transmission power information extracting section 106 to decide transmission power of packet data. Then, the transmission power calculating section 305 outputs obtained transmission power of packet data as transmission power command information to the channel coding sections 111-1 to 111-n and the scheduling section 303.

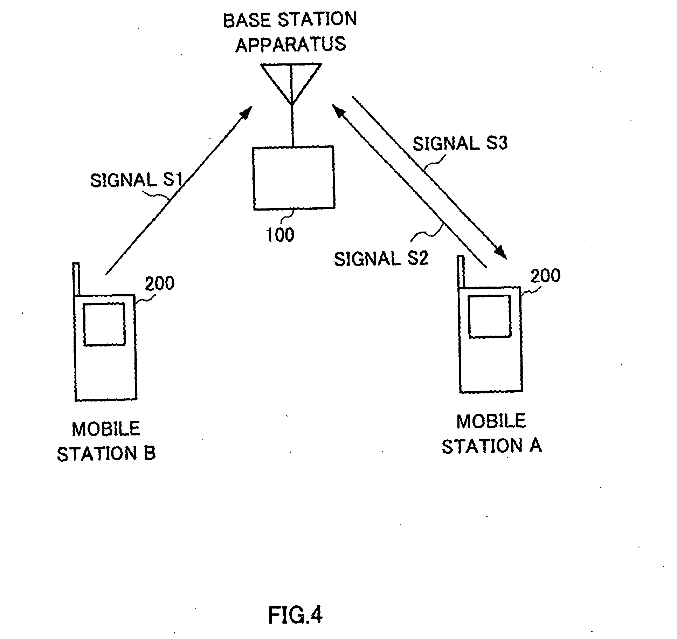

Operations of the base station apparatus 100 and the mobile equipment 200 will be next explained using FIG. 1, FIG. 2 and FIG. 4. In FIG. 4, a mobile station A and a mobile station B have the same configuration as that of the mobile equipment 200. From FIG. 4, in the mobile station A and the mobile station B, transmission data including transmission power information of the dedicated control channel is coded by the channel coding section 209, the result is modulated by the modulation section 210, the result is spread by the spreading section 211, and the result is subjected to processing such as up-conversion from the baseband frequency to the radio frequency by the transmission radio section 212, so that the mobile station A transmits a signal S1 from the antenna 201 and the mobile station B transmits a signal S2.

In the base station apparatus 100, the signals S1 and the signal S2 of the dedicated channel received by the antenna 101 are subjected to processing such as down-conversion from the radio frequency to the baseband frequency and the like by the reception radio section 102, the result is despread by the despreading section 103, the result is demodulated by the demodulation sections 104-1 to 104-n, the result is decoded by the channel coding sections 105-1 to 105-n, and transmission power information is extracted by the transmission power information extracting section 106 and output to the condition setting section 108.

The received signal demodulated by the demodulation sections 104-1 to 104-n is output to the reception power measurement section 107 and reception power in the base station apparatus 100 is measured by the reception power measurement section 107, and the result is output to the condition setting section 108.

The condition setting section 108 executes scheduling based on reception power and transmission power information to perform calculation of the transmission parameter of the mobile station A and that of the mobile station B and calculation of transmission power of packet data of the mobile station A, and that of the mobile station B.

Then, the condition setting section 108 controls the channel coding sections 111-1 to 111-n based on the scheduling result and outputs information of the calculated transmission power of packet data to the channel coding sections 111-1 to 111-n. For example, when the mobile station A is scheduled, the base station apparatus 100 transmits a signal indicating that scheduling has been made to the mobile station A and no signal indicating that scheduling has been made to the mobile station B.

Transmission data including transmission power command information input from the condition setting section 108 and transmission parameter information input from the condition setting section 108 is coded by the channel coding sections 111-1 to 111-n, the result is spread by the spreading sections 113-1 to 113-n and the result is up-converted from the baseband frequency to the radio frequency by the transmission radio section 114, and the result as a signal S3 is transmitted to the mobile station A from the antenna 101. In addition, though the above has explained that the base station apparatus 100 transmits transmission power command information using the dedicated channel, when transmission is performed by a common control channel, the signal S3 is processed in such a way that only the mobile station A is correctly decoded.

In the mobile station A that received the signal S3 transmitted from the base station apparatus 100, the signal S3 is down-converted from the radio frequency to the baseband frequency by the reception radio section 202, the result is despread by the despreading section 203, the result is demodulated by the demodulation section 204, and the result is decoded by the channel coding section 205 to obtain received data. The received data decoded by the channel coding section 205 is output to the condition setting information extracting section 206.

Transmission power information sent from the base station apparatus 100 is extracted by the transmission power command information extracting section 207 using received data input to the transmission power command information extracting section 207.

The transmission power deciding section 208 decides transmission power based on the extracted transmission power information and outputs the decided transmission power to the transmission radio section 212. On the other hand, the condition setting information extracting section 206 extracts information of the transmission parameter from received data. Then, the extracted transmission parameter information is output to the channel coding section 209 and the modulation section 210. Packet data input to the channel coding section 209 is coded by the channel coding section 209 based on the transmission parameter information. Transmission power information of the dedicated control channel subjected to transmission power control is input to the channel coding section 216, and the result is subjected to a predetermined processing such as coding by the channel coding section 216.

Packet data input to the modulation section 210 is modulated based on information of the modulation scheme of the transmission parameter information input to the modulation section 210 from the condition setting information extracting section 206. Packet data input to the spreading section 211 is spread, the result is subjected to processing such as up-conversion from a baseband frequency to a radio frequency by the transmission radio section 212, and the result is transmitted from the antenna 201 by transmission power input from the transmission power deciding section 208.

The base station apparatus 100 that receives packet data transmitted by the mobile station A is subjected to processing such as down-conversion from a radio frequency to a baseband frequency by the reception radio section 115, the result is despread by the despreading section 116, the result is demodulated by the demodulation sections 117-1 to 117-n, and the result is decoded by the channel coding sections 118-1 to 118-n to obtain packet data. Packet data obtained in the base station apparatus 100 can be decoded without any error in the base station apparatus 100 since data is adaptively modulated and coded according to a communication environment in the mobile station A.

The mobile station A can transmit data to the base station apparatus 100 with a modulation scheme and a coding rate according to communication quality as far as the signal S3 is received. On the other hand, since the mobile station B does not receive the signal that corresponds to the signal S3 and is addressed to itself from the base station apparatus 100, the mobile station B is in a transmission standby state in connection with data until a signal that corresponds to the signal S3 and is addressed to itself is sent from the base station apparatus 100.

Transmission power information transmitted to the base station apparatus from the mobile equipment are transmitted with a predetermined timing regardless of the presence or absence of data that is transmitted from the mobile equipment to the base station apparatus.

In this way, according to Embodiment 1 of the present invention, the base station apparatus decides transmission power of packet data using transmission power information, reception power and reception quality sent from the communication terminal apparatus, and transmits the decided transmission power as transmission power command information to the communication terminal apparatus, and the communication terminal apparatus sets transmission power of packet data based on transmission power command information, so that communication can be made with a suitable transmission rate according to communication quality in the uplink, and communication can be performed based on suitable resource management. Moreover, since the base station apparatus creates transmission power command information to each mobile equipment and the mobile equipment sets transmission power of packet data based on transmission power command information, when the base station apparatus performs communication with multiple mobile equipment using the channel for packet data transmission, each mobile equipment can set transmission power of packet data without considering an amount of interference due to the other mobile equipment and the base station apparatus controls transmission power of packet data of the mobile equipment, thereby making it possible to adjust the entire reception power and enabling effective use of radio resources.

### (Embodiment 2)

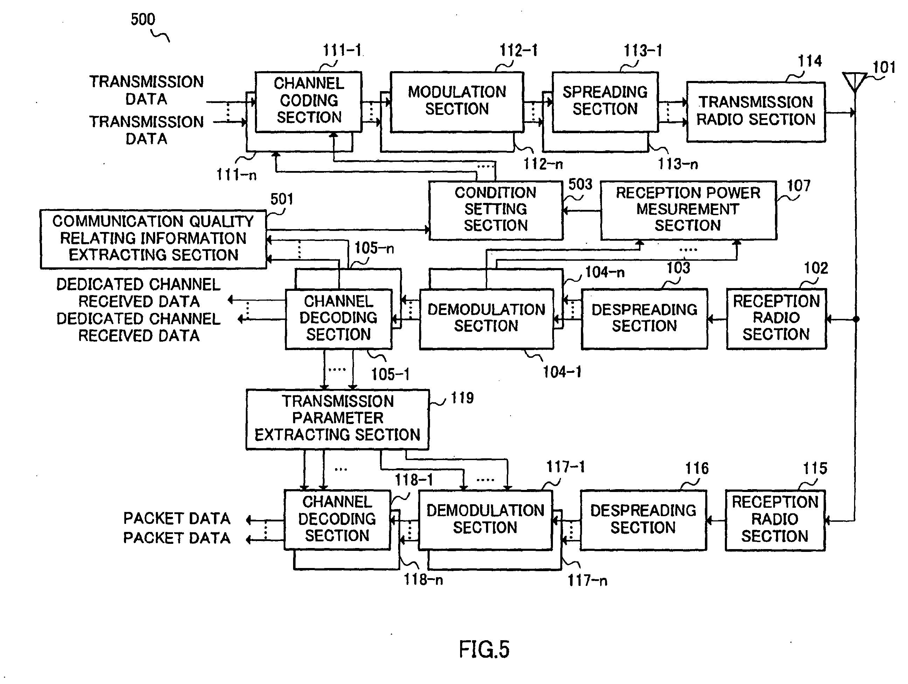

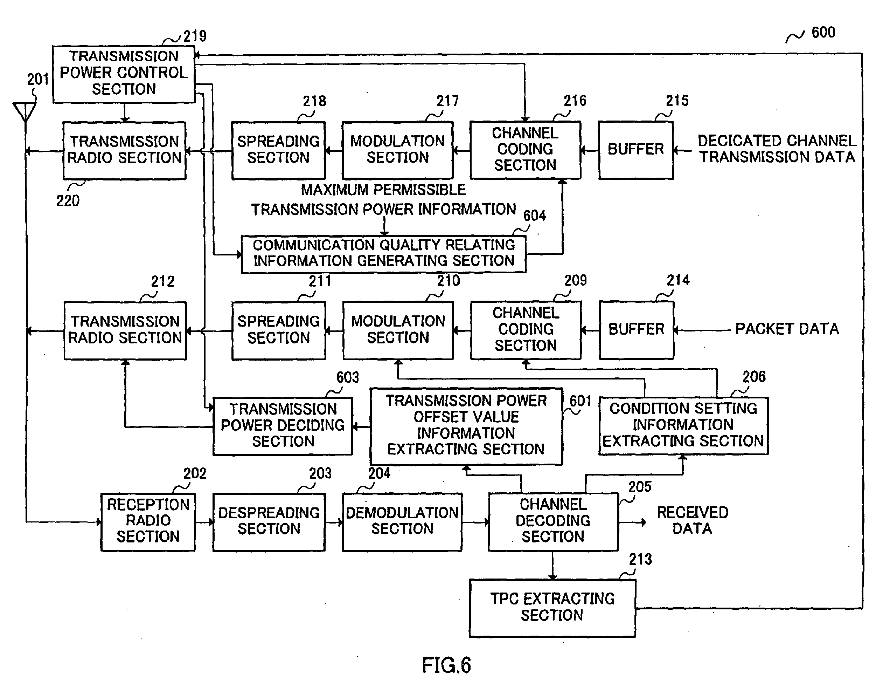

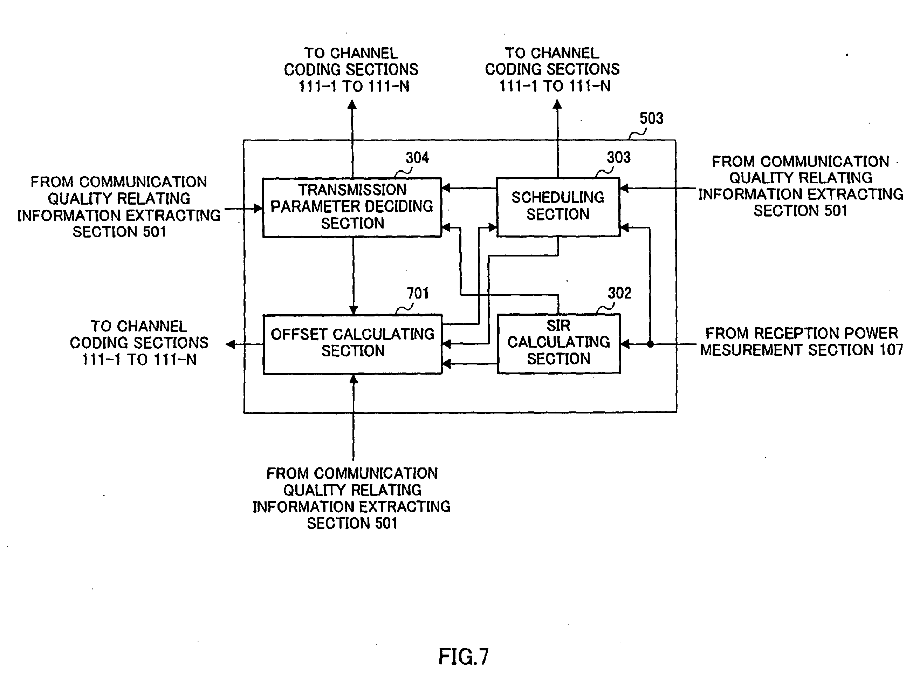

FIG. 5 is a view illustrating a configuration of a base station apparatus 500 according to Embodiment 2 of the present invention, FIG. 6 illustrates mobile equipment 600, which is a communication terminal apparatus according to Embodiment 2 of the present invention, and FIG. 7 is a view illustrating a configuration of a condition setting section 503.

This embodiment is characterized in the points in that the base station apparatus 500 obtains an offset value to current transmission power of mobile equipment and mobile equipment 600 sets transmission power using the obtained offset value. In this embodiment, FIG 5 is different from FIG. 1 in a configuration in which a communication quality relating information extracting section 501 is provided, FIG. 6 is different from FIG 2 in a configuration in which a transmission power offset value information extracting section 601 and a communication quality relating information generating section 604 are provided, and FIG. 7 is different from FIG. 3 in a configuration in which an offset calculating section 701 is provided.

In addition, the same reference numerals are added to the same configuration parts as those of FIG. 1, FIG. 2, and FIG. 3, and the explanation is omitted.

First of all, the configuration of the base station apparatus 500 will be explained using FIG. 5. The communication quality relating information extracting section 501, serving as a communication quality information extracting section, extracts communication quality relating information from received data input from the channel coding sections 105-1 to 105-n, and outputs the extracted communication quality relating information to a condition setting section 503. Here, communication quality relating information is transmission power information of a dedicated control channel of mobile equipment 600, a difference (hereinafter described as "residual transmission power") between maximum permissible transmission power (upper limit value) of mobile equipment 600 and transmission power of a dedicated channel, or a ratio between residual transmission power and transmission power of a dedicated channel.

By using communication quality relating information input from the communication quality relating information extracting section 501 and reception power input from the reception power measurement section 107, the condition setting section 503, serving as an information generating section, performs scheduling, calculation of a transmission parameter, and calculation of transmission power of packet transmitted using a channel for packet data transmission. Then, the condition setting section 503 obtains an offset value between transmission power of the dedicated channel and transmission power of packet data after deciding transmission power of packet data, and outputs the obtained offset value as offset value information to the channel coding sections 111-1 to 111-n. The transmission power of packet data is calculated with consideration given to the point that transmission power is set to be a range that does not exceed the residual transmission power. In addition, details of the condition setting section 503 will be described later.

An explanation will be next given of the configuration of mobile equipment 600, serving as a communicating terminal for the base station apparatus 500, using FIG. 6. The transmission power offset value information extracting section 601, serving as an extracting section, extracts information of an offset value from received data input from the channel coding section 205, and outputs the extracted information of the offset value to a transmission power deciding section 603.

The transmission power control section 219 outputs transmission power information of the dedicated control channel, which is to be transmitted to the base station apparatus 500, to the communication quality relating information generating section 604 and the transmission power deciding section 603.

The transmission power deciding section 603, serving as a transmission power setting section, decides transmission power based on offset value information input from the transmission power offset value information extracting section 601 and transmission power information input from the transmission power control section 219. Namely, the transmission power deciding section 603 sets transmission power, which is obtained by adding the offset value input from the transmission power offset value information extracting section 601 to transmission power as transmission power information of the dedicated control channel input from the transmission power control section 219 notified to the base station apparatus 500, as transmission power of packet data, which is to be transmitted using the channel for packet data transmission. Then, the transmission power deciding section 603 controls the transmission radio section 212 in such a way that packet data is transmitted using set transmission power.

The communication quality relating information generating section 604 generates communication quality relating information and outputs the result to the channel coding section 216 based on information of transmission power of the dedicated control channel input from the transmission power control section 219 and maximum permissible transmission power information, which is a maximum value of transmission power. Namely, the communication quality relating information generating section 604 can perform any one of processing where transmission power information, serving as communication quality relating information input from the transmission power control section 219, is output to the channel coding section 216, processing where a difference between maximum permissible transmission power and transmission power set by the transmission power control section 219 is calculated to obtain residual transmission power and the obtained residual transmission power, serving as communication quality relating information, is output to the channel coding section 216, processing where a ratio between the obtained residual transmission power and transmission power input from the transmission power control section 219 is calculated and obtained and the obtained ratio between the obtained residual transmission power and transmission power input from the transmission power control section 219, serving as communication quality relating information, is output to the channel coding section 216, or combine these processing suitably.

The channel coding section 216 codes transmission data of the dedicated channel input from the buffer 215, transmission power information of the dedicated control channel input from the transmission power control section 219 and communication quality relating information such as residual transmission power input from the communication quality relating information generating section 604, and outputs the result to the modulation section 217. In addition, when information of the ratio between the residual transmission power from the communication quality relating information generating section 604 and the transmission power input from the transmission power control section 219 is input, the transmission power control section 219 does not have to output transmission power information of the dedicated control channel to the channel coding section 216.

The details of the condition setting section 503 will be next explained using FIG. 7. The offset value calculating section 701 sets transmission power of packet data in the scheduled mobile equipment 600 based on transmission parameter information, scheduling information and SIR input from the SIR calculating section 302. Then, the offset value calculating section 701 obtains an offset value between the calculated transmission power of packet data and the transmission power of the dedicated channel notified from the mobile equipment, and outputs the obtained offset value, serving as offset value information, to the channel coding sections 111-1 to 111-n.
The offset value calculating section 701 prevents transmission power frombeing set to maximum transmission power or more that can be set for each mobile equipment 600 based on the residual transmission power information input from the communication quality relating information extracting section 501. Then, information of transmission power of packet data obtained this time is also output to the scheduling section 303 and considered at the scheduling time.

The offset value calculating section 701 obtains a required SIR of packet data from information of transmission parameter input from the transmission parameter deciding section 304 using the reference table between the transmission parameter and SIR of packet data. The offset value calculating section 701 compares SIR of the dedicated channel input from the SIR calculating section 302 with the obtained required SIR of packet data, calculates an offset value as to how much dB is lacking in transmission power of packet data as compared with transmission power of the dedicated channel, and adds the calculated offset value to transmission power of the dedicated channel input from the transmission power information extracting section 106 to decide transmission power of packet data. Then, the offset value calculating section 701 outputs the obtained transmission power of packet data, serving as transmission power command information, to the scheduling section 303. On the other hand, the offset value calculating section 701 outputs the obtained information of offset value to the channel coding sections 111-1 to 111-n.

An explanation will be next given of operations of the base station apparatus 500 and those of the mobile equipment 600 using FIG. 4. The mobile station A and the mobile station B transmit the signal S1 and the signal 2 including communication quality relating information to the base station apparatus 500. The base station apparatus 500 that received the signal S1 and the signal S2 including communication quality relating information decides an offset value between the transmission power of the dedicated channel and the transmission power of packet data from the communication quality relating information, reception power and reception quality, and includes the decided offset value in transmission data as offset value information and transmits the result as the signal S3 to the mobile station A and the mobile station B.

The mobile station A that received offset value information sets transmission power, which is obtained by adding the offset value to transmission power of the dedicated channel notified to the base station apparatus 500 and serves as transmission power of packet data, and transmits packet data using the decided transmission power. On the other hand, since the mobile station B does not receive the signal that corresponds to the signal S3 and is addressed to itself from the base station apparatus 500, the mobile station B is in a transmission standby state in connection with data until a signal that corresponds to the signal S3 and is addressed to itself is sent from the base station apparatus 500.

In this way, according to Embodiment 2 of the present invention, the base station apparatus calculates an offset value between transmission power of data of the dedicated channel and transmission power of packet data using transmission power information, reception power and reception quality sent from the communication terminal apparatus and transmits the calculated offset value information to the communication terminal apparatus, and the communication terminal apparatus adds the offset value instructed by the offset value information to transmission power of data of the dedicated channel notified to the base station apparatus to set transmission power of packet data, so that communication can be performed in the uplink based on suitable resource management. Moreover, since information indicating the offset value to the current transmission power of the mobile equipment 600 is transmitted to a communicating terminal, a range of a value to be transmitted is narrowed as compared with the case in which transmission power information is transmitted, so that the number of necessary bits reduces. Furthermore, since transmission power of packet data is set based on information indicating transmission power of data of the dedicated channel notified to the base station apparatus and the offset value, only an amount corresponding to the offset value is added to transmission power of data of the dedicated channel and the result may be used as transmission power of packet data, so that transmission power of packet data can be easily set.

### (Embodiment 3)

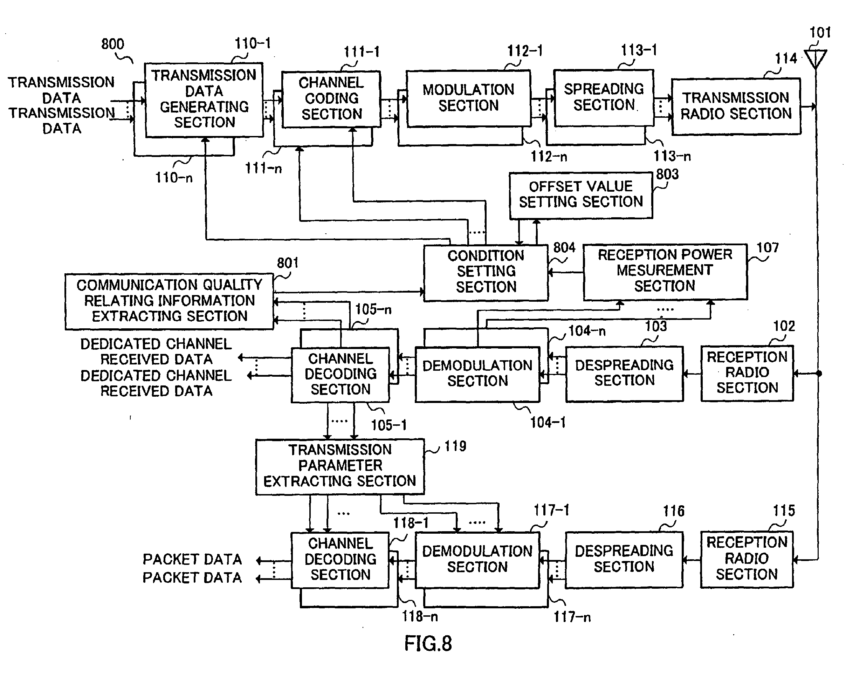

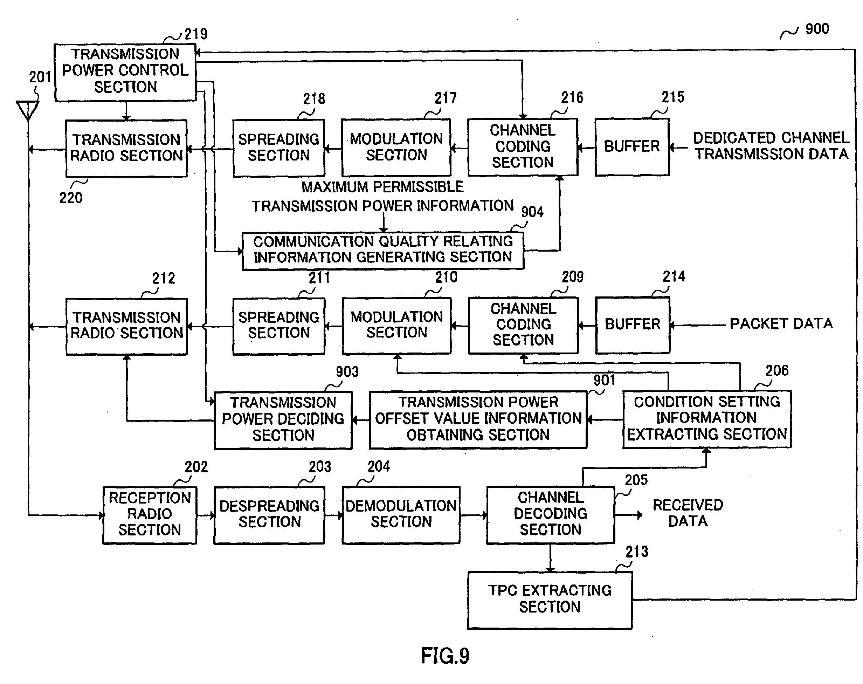

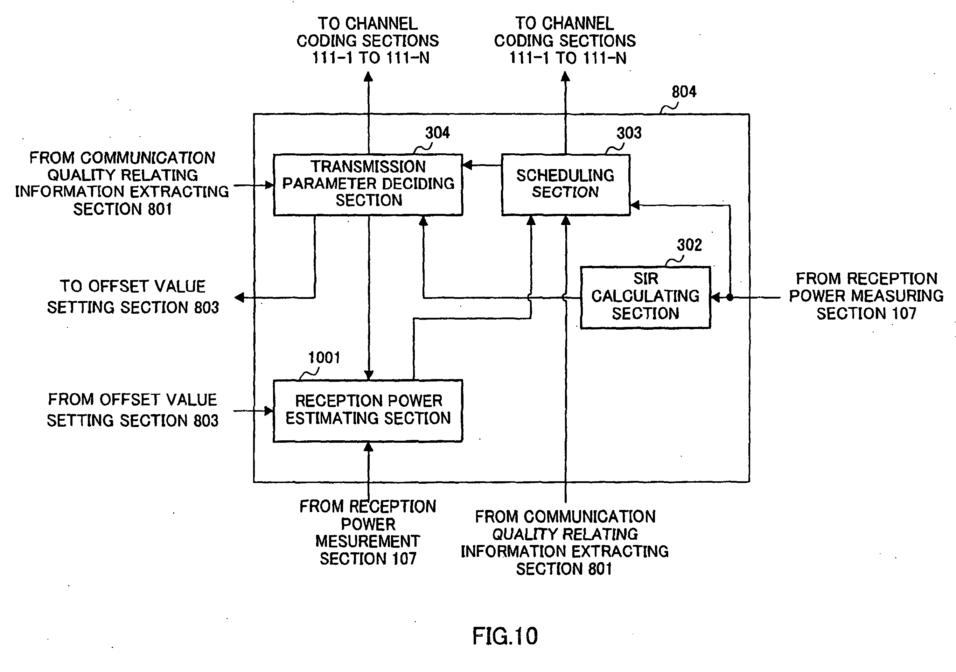

FIG. 8 is a view illustrating a configuration of a base station apparatus 800 according to Embodiment 3 of the present invention, FIG 9 is a view illustrating a configuration of mobile equipment 900 serving as a communication terminal apparatus according to Embodiment 3 of the present invention, and FIG. 10 is a view illustrating a configuration of condition setting section 804 according to Embodiment 3 of the present invention. This embodiment is characterized in the point in that the mobile equipment 900 sets transmission power based on transmission parameter information transmitted from the base station apparatus 800.

In this embodiment, FIG 8 is different from FIG. 1 in a configuration in which a communication quality relating information extracting section 803 is provided, FIG. 9 is different from FIG 2 in a configuration in which a transmission power offset value information obtaining section 901 and a transmission power information extracting section 902 are provided, and FIG. 10 is different from FIG. 3 in a configuration in which a reception power estimating section 1001 is provided. In addition, the same reference numerals are added to the same configuration parts as those of FIG. 1, FIG. 2, and FIG. 3, and the explanation is omitted.

First of all, the configuration of the base station apparatus 800 will be explained.

A communication quality relating information extracting section 801 extracts communication quality relating information, which is communication quality information such as transmission power of the mobile equipment 900 or the residual transmission power of the mobile equipment 900 or a ratio between the residual transmission power and transmission poser of a dedicated channel from received data input from the channel coding sections 105-1 to 105-n, and outputs the extracted communication quality relating information to the condition setting section 804.

The offset value setting section 803 stores an offset value to transmission power of data of the dedicated channel according to transmission parameter information and outputs an offset value according to transmission parameter information set by the condition setting section 804 to the condition setting section 804. In addition, the offset value setting section 803 may obtain an offset value by calculation using a predetermined equation without limiting to the case in which the offset value to transmission power of data of the dedicated channel is stored according to transmission parameter information. In this case, the mobile equipment 900 also stores the same equation and the same offset value can be obtained from the same transmission parameter.

The condition setting section 804, serving as an information generating section, performs scheduling and calculation on a transmission parameter, which is transmission power command information, using communication quality relating information input from the communication quality relating information extracting section 801 and reception power input from the reception power measurement section 107. Then, the condition setting section 804 obtains an offset value to transmission power of data of a dedicated channel corresponding to a transmission parameter that is set after information of the set transmission parameter is output to the offset value setting section 803, and estimates reception power when receiving packet data modulated and coded using the transmission parameter, which is currently set using the obtained offset value and reception power. Then, when estimated reception power is below a threshold value, the condition setting section 804 sets a transmission parameter again and repeats this operation until estimated reception power reaches the threshold value or more. The condition setting section 804 outputs the thus calculated transmission parameter information and scheduling information to the channel coding sections 111-1 to 111-n of the scheduled mobile equipment 900.

An explanation will be next given of the configuration of mobile equipment 900, serving as a communicating terminal for the base station apparatus 800, using FIG. 9. The condition setting information extracting section 206, serving as an extracting section, determines whether an enabling signal that enables transmission to the base station apparatus 800 is included in received data. Then, when the enabling signal is included, the condition setting information extracting section 206 extracts transmission parameter information from received data input from the channel coding section 205, and outputs the extracted transmission parameter information to the channel coding section 209, the modulation section 210 and the transmission power offset value information obtaining section 901.

The transmission power offset value information obtaining section 901 selects a preset offset value between transmission power of data of a dedicated channel and transmission power of packet data from transmission parameter information input from the condition setting information extracting section 206, and outputs the selected offset value to a transmission power deciding section 903. Regarding the transmission parameter, if the same transmission parameter is input to the transmission power offset value information obtaining section 901 and the offset value setting section 803 of the base station apparatus 800, the transmission power offset value information obtaining section 901 and the offset value setting section 803 output the same offset value. In addition, the transmission power offset value information obtaining section 901 may obtain an offset value by calculation using a predetermined equation without limiting to the case in which the offset value to transmission power is stored according to the transmission parameter. In this case, the mobile equipment 800 also stores the same equation and the same offset value can be obtained from the same transmission parameter.

The transmission power deciding section 903, serving as a transmission power setting section, decides transmission power of packet data using the offset value input from the transmission power offset value information obtaining section 901 and transmission power information of data the dedicated channel notified to the base station apparatus 800 input from the transmission power control section 219, and controls the transmission radio section 212 in such a way that packet data is transmitted using the decided transmission power. This makes it possible for the mobile equipment 900 to set transmission power based on transmission parameter information according to communication quality relating information.

A communication quality relating information generating section 904 generates communication quality relating information to output to the channel coding section 209 based on transmission power information and maximum permissible transmission power information. Namely, the communication quality relating information generating section 904 can perform any one of processing where transmission power information, serving as communication quality relating information, input from the transmission power control section 219 is output to the channel coding section 216, processing where a difference between maximum permissible transmission power and transmission power set by the transmission power control section 219 is calculated to obtain residual transmission power and the obtained residual transmission power as communication quality relating information is output to the channel coding section 216, processing where a ratio between the obtained residual transmission power and transmission power input from the transmission power control section 219 is calculated and obtained and the obtained the ratio between the obtained residual transmission power and transmission power input from the transmission power control section 219 is output to the channel coding section 216 as communication quality relating information, or combine these processing suitably.

The details of the condition setting section 804 will be next explained using FIG. 10.

The transmission parameter deciding section 304 compares SIR input from the SIR calculating section 302 with a threshold value. As a result of comparison, when SIR is the threshold value or more, current transmission parameter information is output to the channel coding sections 1111 to 111n and the offset value setting section 803 without changing the transmission parameter since the quality is good. While, as a result of comparison, when SIR is below the threshold value, the transmission parameter deciding section 304 refers to the offset value of the offset value setting section 803 in such a way that SIR reaches the threshold value or more since the quality is poor. Then, the transmission parameter deciding section-304 decides a transmission parameter using an estimation result of reception power estimated using the referred offset value input from the reception power estimating section 1001, and outputs the decided transmission parameter, serving as transmission parameter information, to the channel coding sections 111-1 to 111-n and the offset value setting section 803. In this way, the transmission parameter deciding section 304 resets the transmission parameter repeatedly until SIR, which was calculated using the estimated reception power input from the reception power estimating section 1001, reaches the threshold value or more.

The reception power estimating section 1001 estimates reception power from the offset value between transmission power of data of the dedicated channel input from the offset value setting section 803 and transmission power of packet data and reception power input from the reception power measurement section 107, and outputs the estimated reception power to the transmission parameter deciding section 304 and the scheduling section 303.

Operations of the base station apparatus 800 and the mobile equipment 900 will be next explained using FIG. 3. The mobile station A and the mobile station B transmit the signal S1 and the signal S2 including communication quality relating information to the base station apparatus 800. The base station apparatus 800 that received the signal S1 and the signal S2 including communication quality relating information transmits the signal S3, which enables the mobile station A to transmit packet data based on communication quality relating information, reception power and reception quality, to the mobile station A. The mobile station A that received the signal S3 including the signal, which enables transmission of packet data, decides transmission power of packet data based on transmission parameter information included in the signal S3, and transmits packet data using the decided transmission power.

On the other hand, since the mobile station B does not receive the signal that corresponds to the signal S3 and is addressed to itself from the base station apparatus 800, the mobile station B is in a transmission standby state in connection with data until a signal that corresponds to the signal S3 and is addressed to itself is sent from the base station apparatus 800.

In this way, according to Embodiment 3 of the present invention, the base station apparatus calculates a transmission parameter using transmission power information, reception power and reception quality sent from the communication terminal apparatus and transmits the calculated transmission parameter, serving as transmission parameter information, to the communication terminal apparatus, and the communication terminal apparatus transmits packet data using transmission power set based on transmission parameter information, so that communication can be performed based on suitable resource management in the uplink. Moreover, there is no need to transmit information dedicated to setting transmission power to the mobile equipment from the base station apparatus and transmission power is set using transmission parameter information used at the time of generating packet data, thereby making it possible to improve transmission efficiency. Furthermore, since the base station apparatus and the mobile equipment can set the same offset value from the same transmission parameter, the base station apparatus can estimate its reception power, set transmission parameter information with consideration given to estimated reception power to transmit to the mobile equipment, and the base station apparatus can obtain packet data with a small amount of interference and good quality.

### (Embodiment 4)

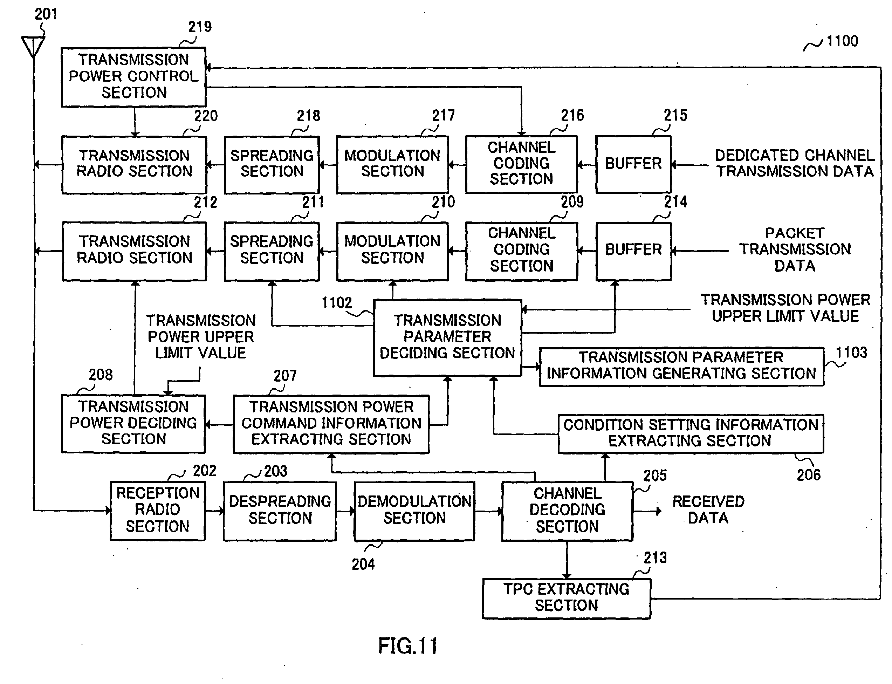

FIG. 11 is a view illustrating a configuration of mobile equipment 1100 according to Embodiment 4 of the present invention. This embodiment is characterized in the point that when transmission power instructed by transmission power command information is an upper limit value or more, the mobile equipment sets such a transmission parameter that does not generate an error in packet data even if transmission is performed using transmission power that is smaller than instructed transmission power.

In this embodiment, FIG. 11 is different from FIG. 2 in a configuration in which a transmission parameter deciding section 1102 and a transmission parameter information generating section 1103 are provided. In addition, the same reference numerals are added to the same configuration parts as those of FIG. 2, and the explanation is omitted. Moreover, in this embodiment, the configuration of the base station apparatus is the same as that of FIG. 1, and the explanation is omitted.

The transmission power deciding section 208 determines whether the sum of transmission power input from the transmission power command information extracting section 207 and instructed by the base station apparatus and transmission power of the other channel is an upper limit value or more of transmission power that is a value unique to each mobile equipment 1100. Then, when the sum of the instructed transmission power and the transmission power of the other channel is the upper limit value or more, the transmission power deciding section 208 decides each transmission power in such a way that the sum of the instructed transmission power and the transmission power of the other channel reaches the upper limit value, and when the sum of the instructed transmission power and the transmission power of the other channel is below the upper limit value, the transmission power deciding section 208 decides the instructed transmission power and controls the transmission radio section 212 in such a way that packet data is transmitted using the decided transmission power. Additionally, when the sum of the instructed transmission power and the transmission power of the other channel is the upper limit value or more, the transmission power may be set in such a way that the sum of the instructed transmission power and the transmission power of the other channel is less than the upper limit value without limiting to the case in which each transmission power is set in such a way to reach the upper limit value.

The channel coding section 209 codes packet transmission data input from the buffer 214 to be described later with a coding rate decided by the transmission parameter deciding section 1102 to be described later and outputs the result to the modulation section 210.

The modulation section 210 modulates packet transmission data input from the channel coding section 209 using a modulation scheme with a modulation level decided by the transmission parameter deciding section 1102 and outputs the result to the spreading section 211.

The spreading- section 211 spreads packet transmission data input from the Modulation Section 210 using the spread rate decided by the transmission parameter deciding section 1102, and outputs the result to the transmission radio section 211.

The buffer 214 temporarily stores transmission parameterinformationinputfromatransmissionparameter information generating section 1103 to be described later and packet data, and outputs the result to the channel coding section 209.

The transmission parameter deciding section 1102 decides a transmission parameter based on scheduling information and transmission parameter information extractedby the condition setting information extracting section 206, transmission power command information extracted by the transmission power command information extracting section 207 and the upper limit value of transmission power, which is a unique value to the mobile equipment 1100, and controls the buffer 214, the channel coding section 209, the modulation section 210, and the spreading section 211 using the scheduling information and the decided transmission parameter.

Since the mobile equipment 1100 can increase transmission power up to only the transmission power of the upper limit value at the maximum when transmission power instructed by the transmission power command information exceeds the upper limit of transmission power, a suitable transmission parameter is selected to compensate for an insufficient amount of transmission power corresponding to a difference between the instructed transmission power and the transmission power actually set.

Namely, when transmission power instructed by the transmission power command information is the upper limit or more of transmission power, it is necessary to change the transmission parameter instructed by transmission parameter information from the base station apparatus in order that the base station apparatus can modulate packet data without any error.

More specifically, the modulation level is made smaller than the modulation level instructed by the base station apparatus and the coding rate is made smaller than the coding rate instructed by the base station apparatus, thereby making the transmission rate smaller than the transmission rate instructed by the base station apparatus. Additionally, when transmission power instructed by the transmission power command information exceeds the upper limit of transmission power, either the modulation level instructed by the base station apparatus or the coding rate may be changed without limiting to the case in which all of the modulation level and the coding rate instructed by the base station apparatus are changed, and a parameter that affects quality of the signal such as the spread rate, the number of multiplex codes may be changed without limiting to this.

The transmission parameter information generating section 1103 generates transmission parameter information using information of the decided transmission parameter input from the transmission parameter deciding section 1102 and outputs the result to the buffer 214.

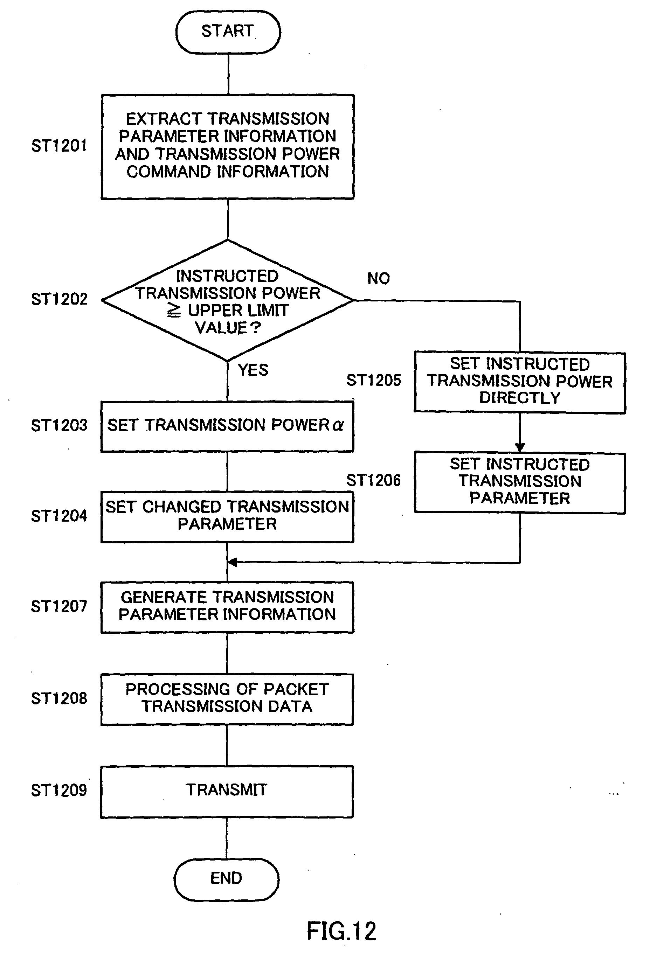

Operations of the mobile equipment 1100 will be next explained using FIG. 12.

First of all, the condition setting information extracting section 206 extracts transmission parameter information and scheduling information from received data, the transmission power command information extracting section 207 extracts transmission power command information, and the TPC extracting section 213 extracts TPC information (step ST1201).

Next, the transmission power control section 219 performs transmission power control to transmission data of the dedicated channel using transmission power set by transmission power control, outputs information of transmission power set by transmission power control to the channel coding section 216, and transmits the result, serving as transmission power information, to the base station apparatus.

Next, the transmission parameter deciding section 1102 determines whether the transmission power instructed by the base station apparatus using transmission power command information is the upper limit value or more of transmission power (step ST1202).

When the transmission power instructed by the base station apparatus is the upper limit value or more, the transmission power deciding section 208 sets transmission power α as an upper limit value (step ST1203).

Next, the transmission parameter deciding section 1102 changes the modulation level, the coding rate instructed by the base station apparatus according to transmission power α to change the transmission rate, sets a modulation level, a coding rate with consideration given to transmission power α to be actually set, and decides a transmission rate (step ST1204).

On the other hand, when the transmission power instructed by the base station apparatus is below the upper limit value, transmission power instructed by the base station is set (step ST1205).

Next, the modulation level, the coding rate and the transmission rate instructed by the base station apparatus are directly set (step ST1206).

Next, the transmission parameter information generating section 1103 generates information of the set transmission parameter (step ST1207).

Next, the channel coding section 209 codes packet transmission data based on the set transmission parameter, the modulation section 210 modulates the result, and the spreading section 211 spreads the result (step ST1208).

Next, the transmission radio section 212 transmits packet transmission data subjected to up-conversion from the antenna 201 (step ST1209).

In this way, according to Embodiment 4 of the present invention, in addition to the effect of the aforementioned Embodiment 1, when the transmission power instructed by the base station apparatus is the upper limit value or more of the transmission power of the mobile equipment, such a transmission parameter is set by which the base station apparatus can demodulate packet data using a desired reception quality even if packet data is transmitted using transmission power smaller than the instructed transmission power, so that an error rate characteristic of packet data on a receiving side can be improved.

Additionally, in this embodiment, though communication with the base station apparatus having the same configuration as that of FIG. 1 is performed, communication with the base station apparatus having the same configuration as that of FIG. 5 or FIG. 8 may be performed without limiting to this.

### (Embodiment 5)

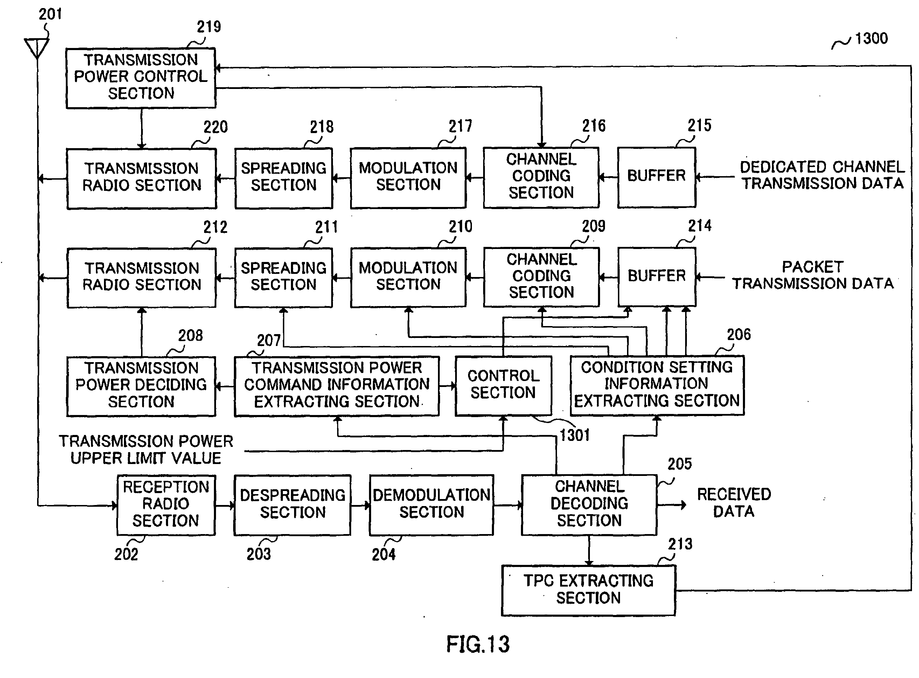

FIG. 13 is a view illustrating a configuration of mobile equipment 1300 according to Embodiment 5 of the present invention. This embodiment is characterized in the point that the mobile equipment 1300 stops transmission of packet data when transmission power instructed by transmission power command information is a transmittable power value or more, and the mobile equipment 1300 transmits packet data where transmission parameter information instructed by the base station apparatus is used as a pilot signal when transmission power instructed by transmission power command information is below the upper limit value,

In this embodiment, FIG. 13 is different from FIG. 2 in a configuration in which a control section 1301 is provided. In addition, the same reference numerals are added to the same configuration parts as those of FIG. 2, and the explanation is omitted. Moreover, in this embodiment, the configuration of the base station apparatus is the same as that of FIG. 1, and the explanation is omitted.

The control section 1301 controls the buffer 214 to prevent packet data from being output when comparing transmission power instructed by the base station apparatus using transmission power command information input from the transmission power command information extracting section 207 with an upper limit value of transmission power that is a value unique to the mobile equipment 1300 and transmission power instructed by the base station apparatus is the upper limit value or more.

The buffer 214 temporarily stores packet transmission data and transmission parameter information input from the condition setting information extracting section 206, inserts each packet data into transmission parameter information and output the result to the channel coding section 209 with a predetermined transmission timing. Moreover, the buffer 214 stops the output of packet data when transmission from the control section 1301 is controlled to be stopped.

Since the base station apparatus 100 that received packet data including transmission parameter information as a pilot sent from the mobile equipment 1300 stores a transmission parameter sent to the mobile equipment 1300, the demodulation sections 117-1 to 117-n can detect transmission parameter information and this makes it possible to detect the top of packet data, so that packet data can be demodulated.

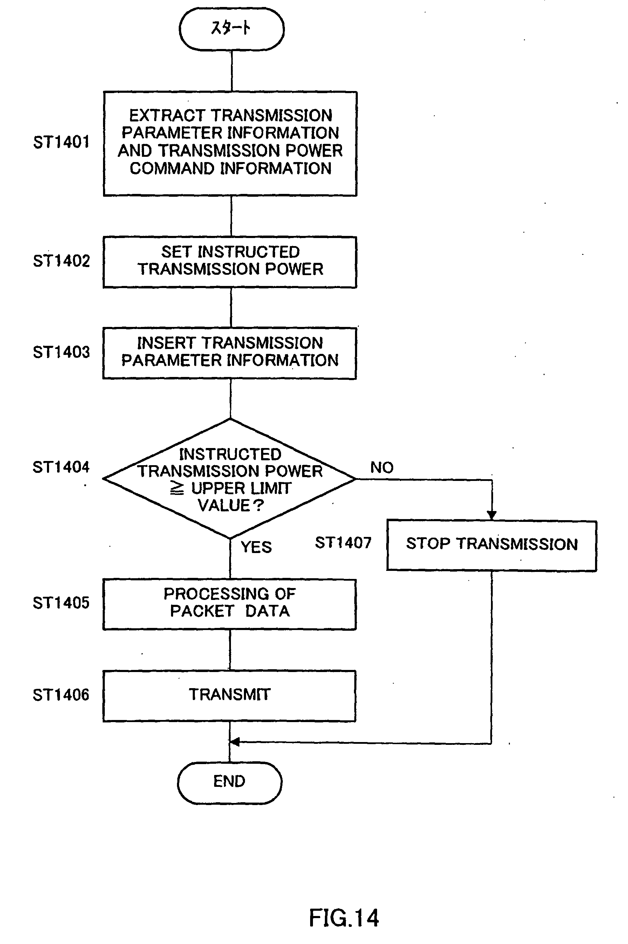

Operations of the mobile equipment 1300 will be next given using FIG. 14.

First of all, the condition setting information extracting section 206 extracts transmission parameter information and scheduling information from received data, the transmission power command information extracting section 207 extracts transmission power command information, and the TPC extracting section 213 extracts TPC information (step ST1401).

Next, the transmission power control section 219 performs transmission power control to transmission data of the dedicated channel using transmission power set by transmission power control, outputs information of transmission power set by transmission power control to the channel coding section 216, and transmits the result, serving as transmission power information, to the base station apparatus.

Next, the transmission power deciding section 208 decides that transmission power instructed by the base station apparatus is directly used as transmission power (step ST1402).

Nex, the buffer 214 inserts information of the transmission parameterextracted bytheconditionsetting information extracting section 206 into packet data (step ST1403) .

Next, the control section 1301 determines whether the transmission power instructed by the base station apparatus using transmission power command information is the upper limit value or more of transmission power (step ST1404).

When transmission power instructed by the base station apparatus is below the upper limit value, the channel coding section 209 codes packet transmission data directly using the modulation level, the coding rate and the transmission rate instructed from the base station apparatus, the modulation section 210 modulates the result, and the spreading section 211 spreads the result (step ST1405).

Next, the transmission radio section 212 transmits packet transmission data subjected to up-conversion from the antenna 201 (step ST1406).

On the other hand, when transmission power instructed by the base station apparatus is the upper limit value or more, the control section 1301 controls packet data from being transmitted (step ST1407).

In this way, according to Embodiment 5 of the present invention, in addition to the effect of the aforementioned Embodiment 1, when transmission power instructed by the base station is the upper limit value or more of transmission power of the mobile equipment, packet data is controlled not to be transmitted, so that packet data can be prevented from being transmitted using transmission power smaller than transmission power smaller than the instructed transmission power and the receiving side can surely demodulate packet data. Moreover, since information of the transmission parameter is transmitted by the base station and the base station knows information of the transmission parameter, the base station can use information of the transmission parameter as a pilot signal and use as a known bit at the decoding time. In order to use information of the transmission parameter as the known bit at the decoding time, this transmission parameter must be coded in this way at the coding time. Furthermore, according to the base station apparatus and communication terminal apparatus of this embodiment, when transmission power instructed by the base station is below the upper limit value of the transmission power of the mobile equipment and a bit pattern of transmission parameter information is known to only the specific communicating parties, transmission parameter information instructed by the base station apparatus is directly used to generate a pilot signal, thereby making it difficult for a third person except the specific communicating parties to detect the top of each packet data, so that the contents of packet data can be concealed.

### (Embodiment 6)

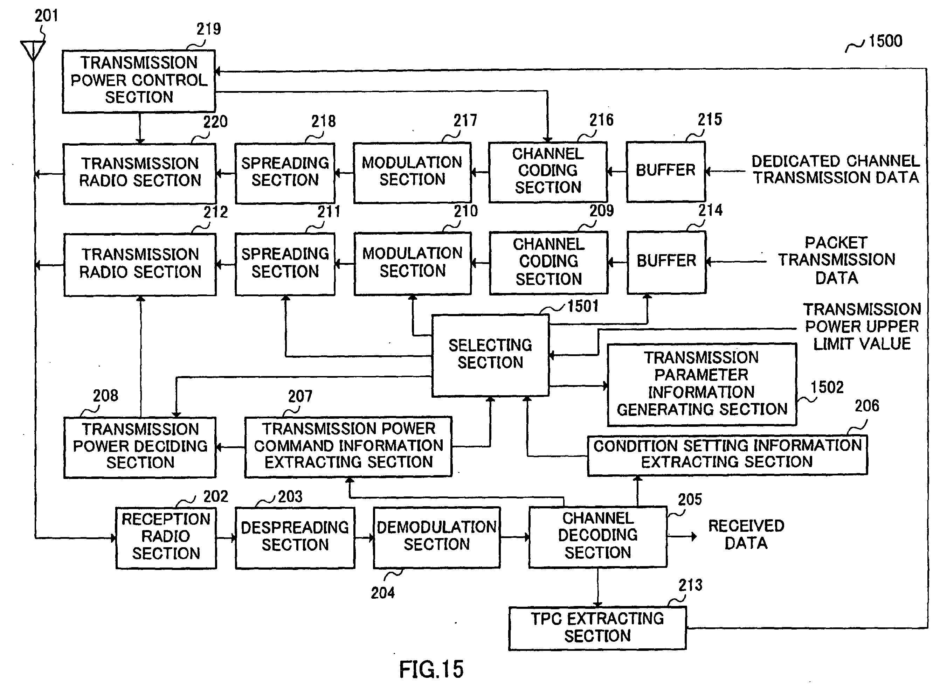

FIG. 15 is a view illustrating a configuration of mobile equipment 1500 according to Embodiment 6 of the present invention. This embodiment is characterized in the point that when transmission power instructed by transmission power command information is below the upper limit value, transmission power is increased and a transmission parameter instructed by the base station apparatus is changed as required to set a transmission parameter.

In this embodiment, FI.G. 15 is different from FIG. 2 in a configuration in which a selecting section 1501 and a transmission parameter information generating section 1502 are provided. In addition, the same reference numerals are added to the same configuration parts as those of FIG. 2, and the explanation is omitted. Moreover, in this embodiment, the configuration of the base station apparatus is the same as that of FIG. 1, and the explanation is omitted.

The transmission power deciding section 208 decides that transmission power instructed by the selecting section 1501 is transmitted and controls the transmission radio section 212 in such a way that packet data is transmitted using the decided transmission power.

The buffer 214 temporarily stores transmission parameter information input from a transmission parameter information generating section 1502 to be described later and packet data, and outputs the result to the channel coding section 209.

When the selecting section 1501 compares transmission power as transmission power command information instructed by the base station apparatus with an upper limit value of transmission power unique to the mobile equipment 1500 and decides that transmission power is increased when the transmission power instructed by the base station apparatus is below the upper limit value. Moreover the selecting section 1501 selects a transmission parameter according to the transmission power decided by use of a reference table between transmission power and transmission parameter or a transmission parameter instructed by the base station apparatus.

Then, the selecting section 1501 outputs set transmission power information to the transmission power deciding section 208 and outputs coding rate information of information of the selected transmission parameter to the channel coding section 209 and outputs modulation scheme information to the modulation section 210, and outputs spread rate information to the spreading section 211. In addition, though the selecting section 1501 decides that transmission power is increased when transmission power is below the upper limit value, the present invention is not limited to this and only the transmission parameter may be changed without increasing transmission power

The transmission parameter information generating section 1502 generates transmission parameter information from information of the transmission parameter input and decided by the selecting section 1501, and outputs the result to the buffer 214.

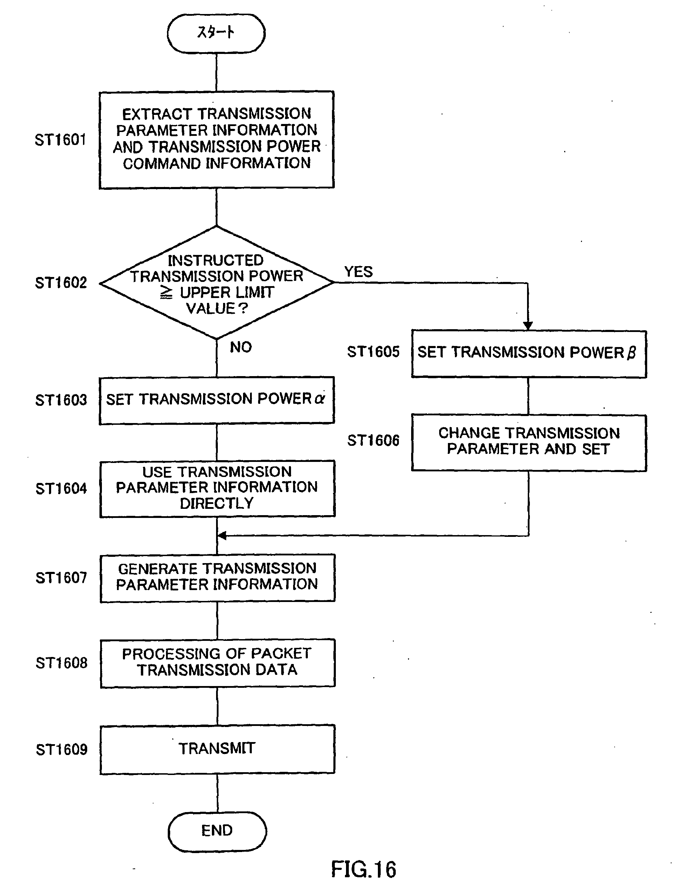

Explanation will be next given of operations of the mobile equipment 1500 using FIG. 16.

First of all, the condition setting information extracting section 206 extracts transmission parameter informationandschedulinginformationfrom received data, the transmission power command information extracting section 207 extracts transmission power command information, and the TPC extracting section 213 extracts TPC information (step ST1601).

Next, the transmission power control section 219 performs transmission power control to transmission data of the dedicated channel using transmission power set by transmission power control, outputs information of transmission power set by transmission power control to the channel coding section 216, and transmits the result, serving as transmission power information, to the base station apparatus.

Next, the selecting section 1501 determines whether the transmission power instructed by transmission power command information from the base station apparatus is the upper limit value or more of transmission power (step ST1602) .

When the instructed transmission power is below the upper limit value, transmission power β instructed by the selecting section 1501 is set (step ST1603), and a transmission parameter is decided according to transmission power β instructed by the selecting section 1501 (step ST1604).

On the other hand, in step ST 1602, when the instructed transmission power is the upper limit value or more, the selecting section 1501 sets transmission power β, which is the upper limit value (step ST1605), and the selecting section 1501 decides a transmission parameter according to transmission power γ (ST1606). Additionally, in this case, the selecting section 1501 may set transmission power of blow the upper limit value.

Next, the transmission parameter information generating section 1502 generates information of the set transmission parameter (step ST1607).

Next, the channel coding section 209 codes packet transmission data based on the set transmission parameter, the modulation section 210 modulates the result, and the spreading section 211 spreads the result (step ST1608).

Next, the transmission radio section 212 transmits packet transmission data subjected to up-conversion from the antenna 201 (step ST1609).

In this way, according to Embodiment 6 of the present invention, in addition to the effect of the aforementioned Embodiment 1, when the transmission power instructed by the base station apparatus is below the upper limit value, it is decided that transmission power is increased, and coding, modulating, spreading are performed using the transmission parameter according to the decided transmission power, so that when the instructed transmission parameter is directly used, the receiving side can demodulate packet data without any error even if the link quality drastically varies and when a transmission parameter different from the instructed transmission parameter is set, a modulation scheme with a larger modulation level than the instructed modulation level by an increase in transmission power can selected or a higher coding rate than the instructed coding rate can be selected, with the result that transmission efficiency can be improved without degrading an error rate characteristic.

Additionally, in the aforementioned embodiment, though packet data is transmitted using transmission power designated by the base station apparatus, packet data may be transmitted using transmission power that is less than the transmission power designated by the base station apparatus and transmittable without limiting to this. This makes it possible to reduce interference with the signal of the other mobile station.

### (Embodiment 7)

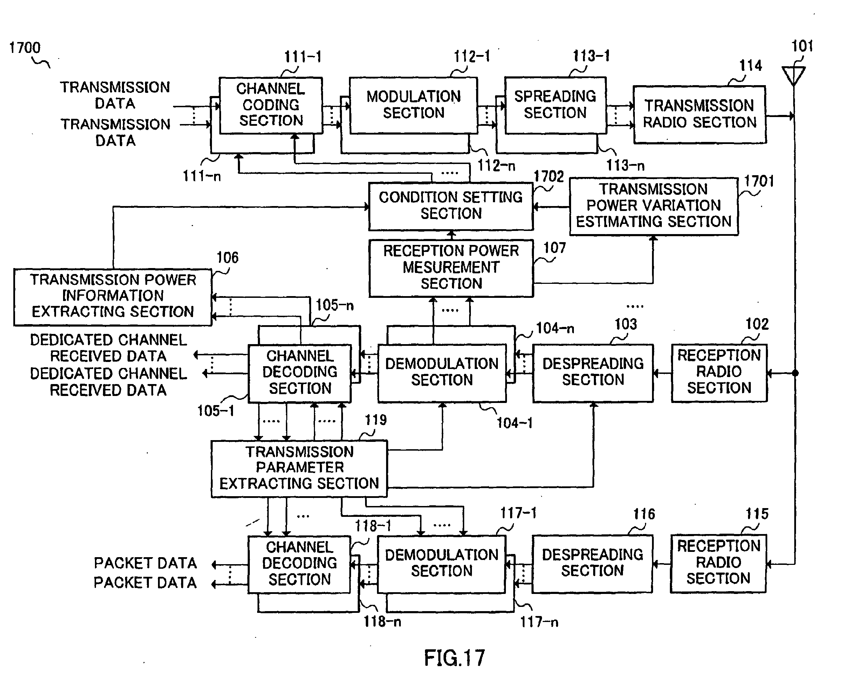

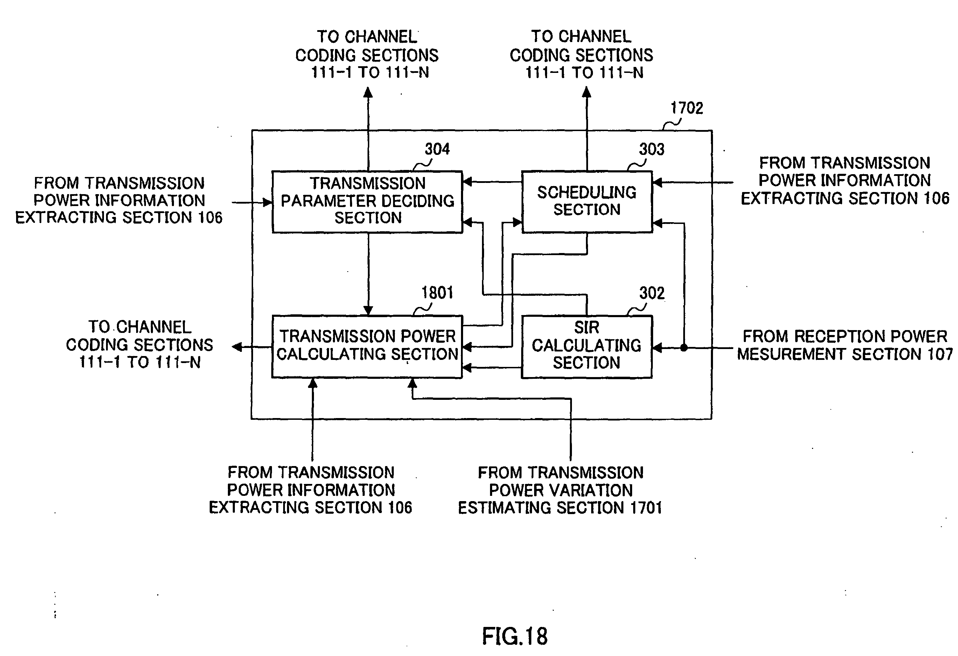

FIG. 17 is a view illustrating a configuration of a base station apparatus 1700 according to Embodiment 7 of the present invention, and FIG. 18 is a view illustrating a configuration of a condition setting section 1702 according to this embodiment. This embodiment is characterized in the point that the base station apparatus 1700 estimates transmission power of a dedicated control channel at the time of transmitting packet data using reception power measured within a predetermined time, and generates transmission power command information with consideration given to the estimated transmission power.

In this embodiment, FIG. 17 is different from FIG. 1 in a configuration in which a transmission power variation estimating section 1701 is provided. In addition, the same reference numerals are added to the same configuration parts as those of FIG. 1, and the explanation is omitted. Moreover, in this embodiment, the configuration of the mobile equipment is the same as that of FIG. 2, and the explanation is omitted.

The transmission power variation estimating section 1701 generates a TPC bit using reception SIR for each predetermined time input from the reception power measurement section 107. Then, the transmission power variation estimating section 1701 calculates an upper limit value of a dedicated channel (hereinafter referred to as "estimation dedicated channel transmission power upper limit value") that is variable by the time of transmitting data, and outputs information corresponding to an increase in the calculated transmission power of the dedicated control channel to a condition setting section 1702.

The condition setting section 1702 decides scheduling, which determines a mobile station transmittable from each mobile equipment 200, and a transmission parameter, which is used when the scheduled mobile equipment 200 generates transmission data, based on reception power input from the reception power measurement section 107 and transmission power information input from the transmission power information extracting section 106.

Moreover, the condition setting section 1702 calculates an SIR using transmission power information input from the transmission power information extracting section 106 and reception power input from the reception power measurement section 107, and decides transmission power of packet data using the calculated SIR, transmission power information and information corresponding to an increase in transmission power of the dedicated control channel input from the transmission power variation estimating section 1701.

Then, the condition setting section 1702 outputs the scheduling result to the channel coding sections 111-1 to 111-n of the corresponding mobile station. Moreover, the condition setting section 1702 outputs calculated transmission parameter information to the channel coding sections 111-1 to 111-n. Though the transmission parameter information is information of the modulation scheme and the coding rate, other parameter information may be possible without limiting to information of the modulation scheme and the coding rate. Furthermore, though scheduling information is individually transmitted to the mobile station here, transmission may be performed by a common control channel.

Explanation will be next given of operations of the condition setting section 1702 using FIG. 18. Additionally, in Fig. 18, the same reference numerals are added to the same configuration parts as those of FIG. 3, and the explanation is omitted.

A transmission power calculating section 1801 obtains a required SIR of packet data from information of the transmission parameter input from the transmission parameter deciding section 304 using a reference table between the transmission parameter and SIR of packet data. The transmission power calculating section 305 compares the SIR of the dedicated channel input from the SIR calculating section 302 with the obtained required SIR of packet data, calculates an offset value as to how much dB is lacking in transmission power of packet data as compared with transmission power of the dedicated channel, and adds the calculated offset value to transmission power of the dedicated channel input from the transmission power information extracting section 106 to decide transmission power of packet data. Then, the transmission power calculating section 305 outputs obtained transmission power of packet data serving, as transmission power command information, to the channel coding sections 1111 to 111n and the scheduling section 303. Moreover, the transmission power calculating section 1801 decides transmission power of such packet data that is not lacking in transmission power when,the mobile equipment transmits packet data based on the estimation dedicated channel transmission power upper limit value input from the transmission power variation estimating section 1701. Namely, in the case where an amount of increase in transmission power due to transmission power control is not considered at the time of deciding transmission power of packet data, there is a possibility that power to be used to transmit packet data will run short by transmission power control, so that the base station apparatus pre-estimates the estimation dedicated channel transmission power upper limit value, which is the maximum value of transmission power increased by transmission power control, and considers the estimation dedicated channel transmission power upper limit value as transmission power of data except packet data, thereby preventing transmission power of packet data from running short. Then, information of thus decided transmission power is also output to the scheduling section 303.

The transmission parameter deciding section 304 obtains an upper limit value of transmission power of packet data using the power transmission of the dedicated channel input from the transmission power information extracting section 106 and the upper limit value of transmission power of each mobile equipment 200. Then, the transmission parameter deciding section 304 obtains an SIR of packet data when an amount of inference is not changed in a range that does not exceed the upper limit value of the transmission power of packet data using the transmission power of packet data. The transmission parameter deciding section 304 decides a transmission parameter from the SIR of packet data obtained using the reference table between the SIR of packet data and the transmission parameter, and outputs information of the decided transmission parameter to the transmission power calculating section 1801.

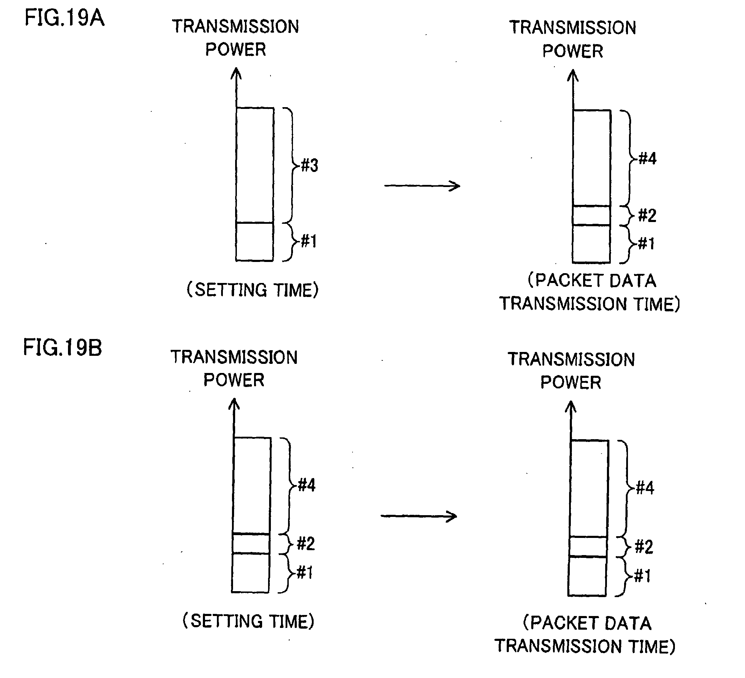

An explanation will be next given of a case in which estimation residual transmission power is considered and a case in which such residual transmission power is not considered in connection with setting the transmission power of packet data using FIG. 19.

FIG. 19(a) illustrates transmission power at the time of setting transmission power command information and the time of transmitting packet data when no estimation residual transmission power is considered, and FIG. 19(b) illustrates transmission power at the time of setting transmission power command information and the time of transmitting packet data when estimation residual transmission power is considered.

First of all, an explanation is given of the case in which no estimation residual transmission power is considered using FIG. 19(a). At the time of setting transmission power command information in the base station apparatus, the dedicated control channel transmits a control signal using transmission power with power quantity #1 based on transmission power information notified from the mobile equipment, and the base station apparatus must instruct transmission power not to exceed the upper limit value of transmission power, so that transmission power of packet data is required to be set within a range of power quantity #3.

On the other hand, at the time of transmitting packet data in themobile equipment, in the case where propagation environment changes, so that, for example, the dedicated control channel is in a state that the control signal is transmitted using transmission power with power quantity (#1 + #2) by transmission power control transmission power of packet data is set to only power quantity #4 (#3>#4). However, when the base station apparatus sets transmission power which larger than power quantity #4 and less than power quantity #3 as transmission power of packet data, transmission power of packet data runs short by power quantity (#3-#4). When packet data is transmitted in a state that such transmission power runs short, an error rate characteristic of packet data degrades.

Next, an explanation is given of the case in which estimation residual transmission power is considered using FIG. 19(b). At the time of setting transmission power in the base station apparatus, the dedicated channel transmits a control signal using transmission power of power quantity #1 based on transmission power information notified from the mobile equipment and the transmission power variation estimating section 1701 estimates that the dedicated channel transmits the transmission signal of the dedicated channel using transmission power of power quantity (#1 + #2) by transmission power control at the packet data transmitting time, and the base station apparatus sends the mobile equipment commands of transmission power as transmission power command information set within a range of power quantity #4 of estimation residual transmission power obtained by subtracting power quantity (#1 + #2) from the upper limit value. Then, when transmission power of packet data is set within the range of power quantity #4, the base station apparatus sets such a transmission parameter that prevents deterioration in an error rate characteristic even if transmission power is set within power quantity #4, and notifies the mobile equipment of information of the set transmission parameter.

On the other hand, at the time of transmitting packet data in the mobile equipment, transmission power of the dedicated control channel results in power quantity (#1 + #2) by transmission power control, so that transmission power of packet data is set within a range of power quantity #4, however, the mobile equipment generates transmission power command information within the range of power quantity #4 with consideration given to power quantity #2 corresponding to an amount of increase at the time of generating transmission power command information, thereby preventing deterioration in the error rate characteristic of packet data without causing shortage of power quantity at the time of transmitting packet data.

In this way, according to Embodiment 7 of the present invention, the communication terminal apparatus estimates whether transmission power of the dedicated channel increases when actually transmitting packet data, and decides transmission power and a transmission parameter with consideration given to an amount of increase when the increase is estimated, thereby making it possible to receive packet data sent using the suitable transmission parameter and transmission power even if transmission power of the dedicated channel is increased by transmission power control and improve the error rate characteristic of packet data.

Additionally, in the aforementioned Embodiments 1 to 7, though transmission power information or communication quality relating information sent from the mobile equipment is used to calculate transmission power in each mobile equipment, information indicating communication quality sent from the mobile equipment, for example, CQI may be used to calculate transmission power and any information may be possible if information is one that is necessary to calculate transmission power without limiting the case in which transmission power information or communication quality relating information sent from the mobile equipment is used to calculate transmission power in each mobile equipment. Moreover, in the aforementioned Embodiments 1 to 7, though the reception power of the dedicated channel and SIR are used as information to be employed by the base station, other quality information such as CIR may be used instead of SIR and any information may be possible if information is one that is necessary to calculate transmission power without limiting to this. Furthermore, aforementioned Embodiments 1 to 7 can be combined.

As explained above, according to the present invention, communication can be performed based on suitable resource management in the uplink.

This application is based on Japanese Patent Application No. 2002-295458 filed on October 8, 2002 and Japanese Patent Application No. 2002-379566 filed on December 27, 2002, entire content of which is expressly incorporated by reference herein.

### Industrial Applicability

The present invention is suitable for use in a communication station apparatus and communication terminal apparatus that performs communications using transmission power according to communication environments in a system that performs high-speed packet transmission in an uplink.

## Claims

1. A base station apparatus comprising:
a scheduling section that allocates a communicating terminal to transmit packet data based on reception power of a dedicated channel, reception quality of the dedicated channel, and first transmission power as transmission power of the dedicated channel of each communicating terminal;
a transmission power deciding section that decides transmission power of packet data transmitted using a channel for packet data transmission from the communicating terminal based on the reception power, the reception quality and the first transmission power;
a transmission parameter deciding section that decides a transmission parameter relating to a transmission rate of the packet data based on the reception power, the reception quality and the first transmission power; and
a notifying section that notifies a communicating terminal allocated by said scheduling section of transmission power command information that instructs transmission of the packet data using the decided transmission power and information of the transmission parameter.

2. The base station apparatus according to claim 1, wherein the transmission power command information comprises information indicating transmission power of the packet data.

3. The base station apparatus according to claim 1, wherein the transmission power command information comprises information indicating an offset value to transmission power of the dedicated channel.

4. The base station apparatus according to claim 1, further comprising a transmission power estimating section that estimates second transmission power as transmission power of the dedicated channel at the time of transmitting packet data in a communicating terminal using reception power,
wherein said transmission power deciding section calculates transmission power usable to transmit packet data within a range of a value obtained by subtracting the second transmission power from a transmission power upper limit value of the communicating terminal; and
wherein said transmission parameter deciding section decides such a transmission parameter by which the packet data can be received with predetermined quality using transmission power calculated by said transmission power deciding section.

5. The base station apparatus according to claim 1, further comprising a demodulation section that receives packet data transmitted to include information of the transmission parameter in a communicating terminal to demodulate information of the transmission parameter as a pilot signal.

6. A communication terminal apparatus comprising:
a transmission power setting section that sets transmission power of packet data transmitted by a channel for packet data transmission based on transmission power command information indicating transmission power instructed by a communicating terminal extracted from received data;
a transmission parameter deciding section that sets a transmission parameter based on information of a transmission parameter relating to a transmission rate of packet data extracted from received data; and
a transmitting section that transmits the packet data using the set transmission power and transmission parameter.

7. The communication terminal apparatus according to claim 6, further comprising:
a transmitting section that transmits information of transmission power of the dedicated channel; and
a storing section that is the same as that of a communicating terminal to store a relationship between the transmission parameter and an offset value of transmission power of the dedicated channel,
wherein said transmission power deciding section sets transmission power obtained by adding the offset value corresponding to the transmission parameter stored in said storing section to transmission power of the dedicated channel as transmission power of the packet data using information of the transmission parameter.

8. The communication terminal apparatus according to claim 6,
wherein said transmission power setting section sets transmission power of the packet data to avoid exceeding an upper limit value when transmission power obtained by adding transmission power of packet data instructed by the transmission power command information to transmission power of the dedicated channel exceeds the upper limit value; and
wherein said transmission parameter deciding section sets such a transmission parameter by which the communicating terminal can receive the packet data with a predetermined quality when the packet data is transmitted using transmission power set by said transmission power setting section.

9. The communication terminal apparatus according to claim 6, further comprising:
a transmission parameter information inserting section that inserts the transmission parameter information into packet data; and
a transmission control section that controls packet data to prevent being transmitted when transmission power obtained by adding transmission power of packet data instructed by the transmission power command information to transmission power of the dedicated channel exceeds an upper limit value and controls packet data to be transmitted using the inserted transmission parameter information as a pilot signal when transmission power obtained by adding transmission power of packet data instructed by the transmission power command information to transmission power of the dedicated channel is below the upper limit value.

10. The communication terminal apparatus according to claim 6,
wherein said transmission power setting section sets transmission power being larger than transmission power instructedby said transmission power command information to avoid exceeding an upper limit value when transmission power obtained by adding transmission power of packet data instructed by the transmission power command information to transmission power of the dedicated channel is below the upper limit value; and
wherein said transmission parameter deciding section sets such a transmission parameter by which the communicating terminal can receive the packet data with a predetermined quality when the packet data is transmitted using transmission power set by said transmission power setting section.

11. A transmission power setting method comprising the steps of:
in a base station apparatus,
allocating a communicating terminal to which packet data is transmittedbased on receptionpower of a dedicated channel, reception quality of the dedicated channel, and a first transmission power of the dedicated channel from each communication terminal apparatus;
deciding transmission power of packet data transmitted using a channel for packet data transmission from the communication terminal apparatus based on the reception power, the reception quality and the first transmission power; and
notifying an allocated communication terminal apparatus of transmission power command information instructing that the packet data is transmitted using the decided transmission power, and
in a communication terminal apparatus,
setting transmission power of packet data transmitted by a channel for packet data transmission based on the transmission power command information extracted from received data.
